# EUROPEAN PATENT APPLICATION

(11) **EP 3 441 949 A1**
(43) Date of publication of application: **13.02.2019**
(21) Application number: 18187865.3
(22) Date of filing: 07.08.2018
(51) Int. Cl.: G07C 9/00, F16P 3/00

(54) **LOCKOUT/TAGOUT SYSTEM**

(30) Priority: 07.08.2017 AU 2017903124
(71) Applicant: Telezygology Inc, Redwood CA 94065 (US)
(72) Inventor: Forsyth, Adam, Newstead Queensland 4006 (AU); Gregg, Ian, Salisbury Queensland 4107 (AU); Bursill, Adam, Dulwich Hill New South Wales 2203 (AU)
(74) Representative: Weal, Emily Teresa

(57) **Abstract**

The invention concerns a lockout/tagout system having a lockout device (100), a master device (200) and a slave device (300). The lockout device (100) and master device (200) are configured in mutual relationship for duplex communication, so that the lockout device (100) can unlock upon a request received from the master device (200), contingent upon an authentication protocol between the master device (200) and the lockout device (100). The master device (200) and the slave device (300) are configured in mutual relationship for duplex communication, such that the master device (200) receives a 'clear' request from the slave device (300), which is accepted by the master device (200) contingent upon an authentication protocol between the master device (200) and the slave device (300).

## Description

### TECHNICAL FIELD

The invention relates to Lockout/Tagout systems of the type used for procedural safety in connection with plant and equipment.

### BACKGROUND ART

Isolation, Locking and Tagging, often referred to as Lockout/Tagout or LOTO, is an essential part of safe work practices in many industries.

The process is designed to provide a safe working environment for support and maintenance personnel working on our near plant, structures or equipment by preventing these from being set in motion or to ensure that stored energy cannot be released.

Energy sources can include electrical, pneumatic, hydraulic, kinetic, thermal, gravity, chemical, mechanical and other forms. Once the plant, structure or equipment is shut down, stored energy is released and all energy sources isolated using some form of mechanical device.

The isolation points are secured with one or many lockout device such as simple padlocks and tagged to ensure that personnel will not inadvertently energize a piece of plant, structure or equipment while someone else is working on it. The basic principle is one padlock, one key, one person and in this way an isolation point cannot be reset until all locks and tags are removed.

A policy is often established where the isolation points are managed by a designated individual often known as an Authorized Person, Authorized Employee, Safety Officer or Isolating Person who is responsible for ensuring that all Crew Members (also known as Affected Persons, Protected Persons et al) who are working on the plant, structure or equipment correctly lockout and tag the isolating device with their own Lockout/Tagout device before starting work.

Further the Safety Officer is often responsible for making sure that all Crew Members have removed their Lockout/Tagout device before restoring the isolation point after work is completed.

These safety processes frequently require that all Crew Members be available at the isolating point before starting work to lockout the isolation; and then again at the end of work to remove their lockout device.

Whilst safety procedures are ensured by existing lockout/tagout procedures, there is a need to at least attempt to address limitations of efficiency arising from existing constraints as outlined above, or at least provide a useful alternative to the status quo.

### SUMMARY OF INVENTION

The present invention arises from a recognition that LOTO (lockout/tagout) practices can be advantageously improved by implementing a system having electronic hardware implementing authentication protocols to address limitations inherent in existing procedures, or at least provide an alternative.

### Technical problem

Industrial infrastructure - rail, telecommunications, energy distribution, water infrastructure, roads and mining, by way of example - is quite often at such a scale that isolation points can be located a distance away from where work is actually conducted.

This often means that work crews have to travel back and forth to isolation points, frequently over large distances or sometimes even through heavy traffic, to start and end work. This is not only inefficient but can also introduce other hazards related to the travel itself.

### Solution to problem

According to one aspect of the invention, there is provided a lockout/tagout system comprising a lockout device, a master device and a slave device, the lockout device and master device being configured in mutual relationship for duplex communication such that the lockout device can unlock upon a request received from the master device, which is accepted by the lockout device contingent upon an authentication protocol between the master device and the lock device; and the master device and the slave device being configured in mutual relationship for duplex communication such that the master device receives a 'clear' request from the slave device, which is accepted by the master device contingent upon an authentication protocol between the master device and the slave device.

According to another aspect of the present invention there is provided a lockout device for use in implementing a lockout/tagout protocol, the lockout device comprising a locking mechanism in communication with a control module, which is in turn in communication with a communications module, the lockout device configured for duplex communication with a master device via the communications module, such that the lockout device can unlock upon a request received from the master device, which is accepted by the lockout device contingent upon an authentication protocol between the master device and the lockout device.

### Definitions

The lockout device is as a matter of convenience interchangeably also termed an Intelligent Lockout Device on account or its control and communications ability, and ability to selectively actuate its lock mechanism. Similarly, the master device is interchangeably termed a Digital Tagboard, and the slave device is interchangeably termed a Crew Member App. The terms Digital Tagboard and Crew Member App are referenced as logical entities rather than with particular reference to their associated hardware or software. Preferably, both the Digital Tagboard and Crew Member App are implemented using general-purpose tablet computing devices operating a custom app executing under its operating system. The term digital key is used broadly as a token able to be exchanged for authentication purposes - and for convenience termed herein - according to context - an Encrypted Master Key (EMK) or a Crew Member Key (CMK).

### Advantageous effects of invention

Advantages of present invention, in preferred embodiments disclosed herein, are manifold. Many will be evident to those skilled in the art and include, amongst others, an ability to comply with established LOTO protocols for industrial infrastructure, while avoiding the necessity for physical presence. This can be of significant benefit when seeking to minimise downtime of critical infrastructure, or avoid the inconvenience of prolonged unscheduled outage. Moreover, many subsidiary benefits follow from the inherent security checks and simplicity of operation attributable to the architecture and operation of physical hardware deployed as part of the system.

Advantageously, the lockout/tagout system comprises one or more Lockout Devices and Digital Tagboards where the Lockout Device is used to secure an isolating point and creates a unique Encrypted Master Key each time it is used to lockout an isolation point; and a Digital Tagboard application that captures, secures and stores the Encrypted Master Key until all personnel entered onto the Digital Tagboard are cleared from the Tagboard.

Advantageously, the Digital Tagboard creates, tracks and manages unique Crew Members Keys for each Crew Member enrolled on the Digital Tagboard, and can only use the EMK to unlock the Intelligent Lockout Device when all Crew Members enrolled in the Digital Tagboard have submitted their CMKs to clear from the Digital Tagboard.

### BRIEF DESCRIPTION OF DRAWINGS

**FIG 1** is a schematic diagram of a LOTO system according to a preferred embodiment of the present invention.
**FIG 2** is a sequence diagram of communications between components of the system of **FIG 1**.
**FIG 3A** is a schematic drawing and FIG 3B is a perspective view of an exemplary Intelligent Lockout Device as presented in **FIGS 1** and **2**.
**FIG 4** is a flowchart representative of steps in the operating algorithm of the Lockout Device of **FIG 3**.
**FIG 5** is a case structure diagram for a Digital Tagboard of **FIGS 1** and **2****.**
**FIGs 6A to 6C** present a sequence of user interface wireframes representing steps in using the Digital Tagboard of **FIG 5**.
**FIG 7** presents a user interface wireframe representing a Crew Member App according to **FIGS 1** and **2****.**
**FIGS 8** and **9** are flowcharts representative of steps performed at the Crew Member App of FIG 7, when locking and unlocking respectively, via Digital Tagboard of **FIGS 1** and **2**.
**FIG 10** is a schematic diagram of a generic architecture representative of a tablet computing device or alternative used to embody the Digital Tagboard and Crew Member App of **FIGS. 1**.

### DESCRIPTION OF EMBODIMENTS

### Overview

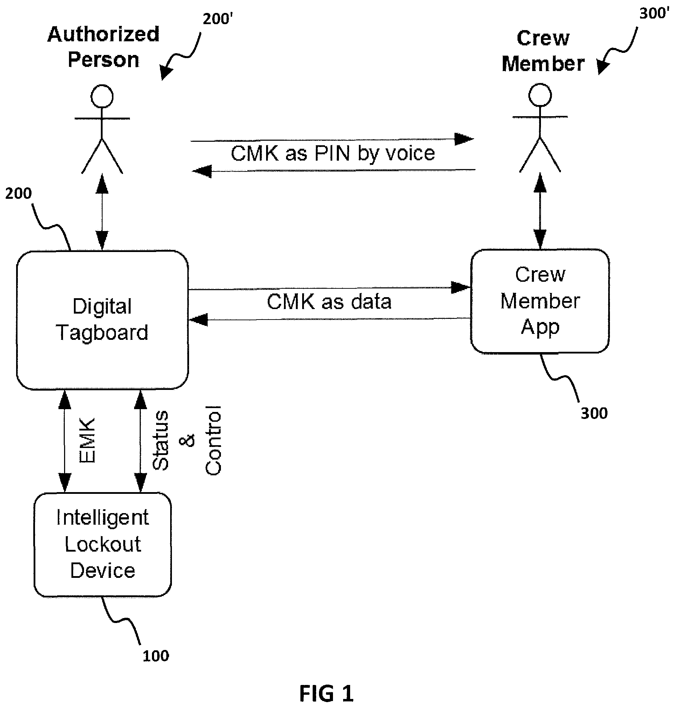

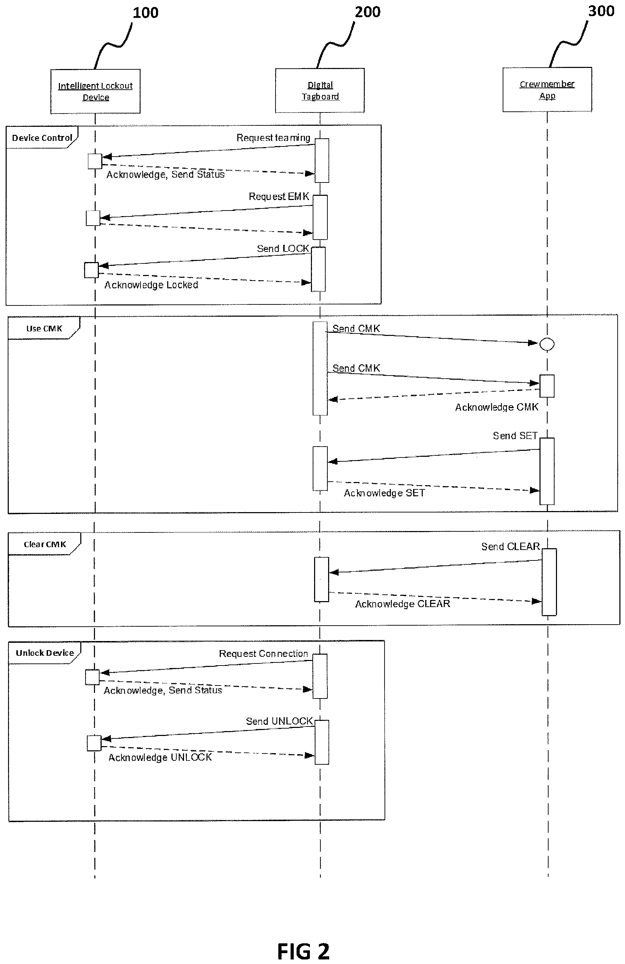

**FIGS 1** and **2** present in overview components of a system for intelligent management of LOTO, comprising an Intelligent Lockout Device **100**, Digital Tagboard **200** and Crew Member App **300**.

Operators include an Authorized Person **200'** and Crew Member **300'**, which respectively use a Digital Tagboard **200** and a Crew Member App **300** - both implemented as apps on a tablet computing device (as described in further detail below).

The Digital Tagboard **200** and Crew Member App **300** interoperate, and Digital Tagboard **200** interoperates with the Intelligent Lockout Device **100**. Interoperability is by reciprocal, that is, duplex wireless communications via suitable protocol.

Authentication and control protocols are presented as indicated: communications are underpinned by use of unique digital Crew Member Key (CMK) associated with each instance of a Crew Member App **300**, and an Encrypted Master Key (EMK) associated with a Digital Tagboard **200** paired with particular Intelligent Lockout Device **100**.

An isolation point secured using the Intelligent Lockout Device **100** can only be removed from the isolation point once a digital Crew Member Key (CMK) has been received and the responsible person for that isolation activity approves removing the device.

### Operational regime

**FIG 2** presents via sequence diagram a sequence of operations involved in communication between the Lockout Device **100**, Digital Tagboard **200** and Crew Member App **300** - as indicated. Stages of communication are chunked as 'Device Control', 'Use CMK', 'Clear CMK' and 'Unlock Device'.

The EMK can be encrypted using any appropriate encryption technique such as AES, RSA or DES.

The Digital Tagboard **200** receives and holds the unique EMK and then issues and manages Crew Member Keys. The Digital Tagboard **200** application is typically used by an Authorized Person **200'** responsible for the isolation of any plant, structure or equipment being worked on by the assigned Crew Members **300'**.

The Crew Member App **300** receives Crew Member Keys from the Digital Tagboard **200** and allows the Crew Member **300'** to manage their keys.

The Lockout Device **100** communicates its EMK to the Digital Tagboard **200**. An Authorized Person **200'** fits a Lockout Device **100** to the isolation point/lockbox/GIB. The Authorized Person **200'** then signs in to the Digital Tagboard **200**, and pairs the Digital Tagboard **200** with the Lockout Device **100**. The Digital Tagboard **200** interrogates the Lockout Device **100** as to status of the Lockout Device **100** (Locked / Unlocked).

The Digital Tagboard **200** receives the Master Key (EMK) from the Lockout Device **100** for that day, project or task.

The EMK is not displayed to the Authorized Person **200'** but kept securely by both the Lockout Device **100** and Digital Tagboard **200**.

The Authorized Person **200'** then enrols Crew Members **300'** onto the Digital Tagboard **200**.

Once a Crew Member **300'** is enrolled the Digital Tagboard **200** issues each Crew Member **300'** a unique digital Crew Member Key (CMK). The Digital Tagboard **200** generates a different CMK for each Crew Member **300'** each time they are enrolled with a Digital Tagboard **200**.

The CMK can be a simple numeric code (that is, a Personal Identification Number or PIN) that is conveyed to the Crew Member **300'** via the Crew Member App **300** or otherwise.

Communications between the Digital Tagboard **200** and the Crew Member App **300** are advantageously via Wifi protocol but may take alternative form as required.

The Crew Member App **300** receives the CMK from the Digital Tagboard **200** and then through a simple user interface allow the Crew Member **300** to use their CMK to lock to the Digital Tagboard **200** or clear themselves from the Digital Tagboard **200**.

Each Crew Member **300'**, when their assigned tasks are complete, used the Crew Member App **300** to transmit a 'Clear' command, which sends their associated CMK as credentials in an authentication protocol.

The Crew Member **300'** may use the Crew Member App **300** on their smartphone, tablet, notebook computer or other handheld mobile device (as described in further detail below) to send their CMK digitally to the associated digital Tagboard **200** so that the Safety Officer **200'** can then acknowledge receipt of the CMK and clear the Crew Member from the Tagboard **200.**

The Crew Member **300'** may use an electronic messaging system such as SMS, MMS or email to communicate their CMK to the Safety Officer **200'** who then acknowledges receipt of the CMK and clears the Crew Member **300'** from the Tagboard **200.**

When all CMKs have been entered into the Digital Tagboard **200** and therefore all Crew Members **300'** have been cleared from the Tagboard **200**, the Safety Officer **200'** can subsequently connect wirelessly with the Lockout Device **100** and uses the secret EMK to unlock the device **100**. The Lockout Device **100** can now be removed and the isolation reset.

### Intelligent lockout device

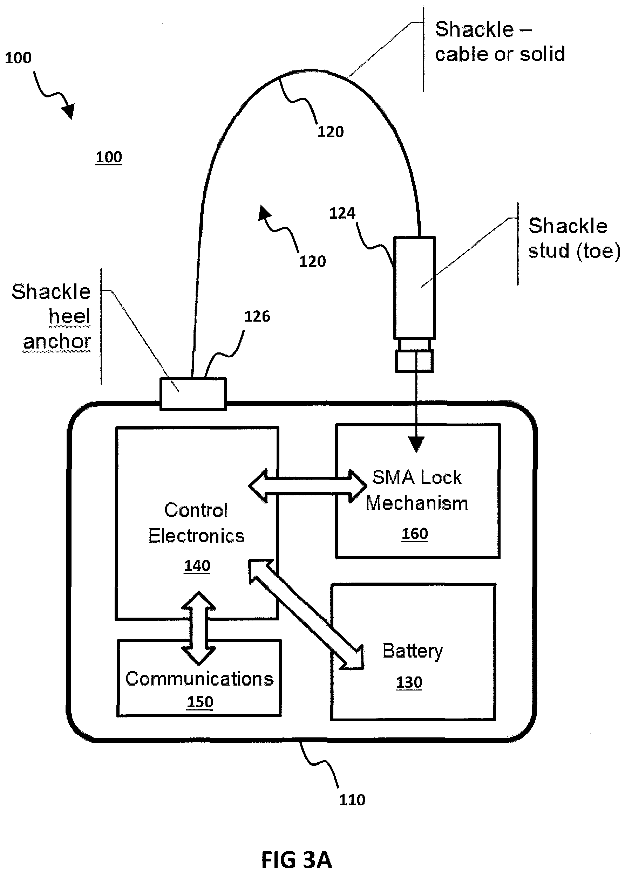

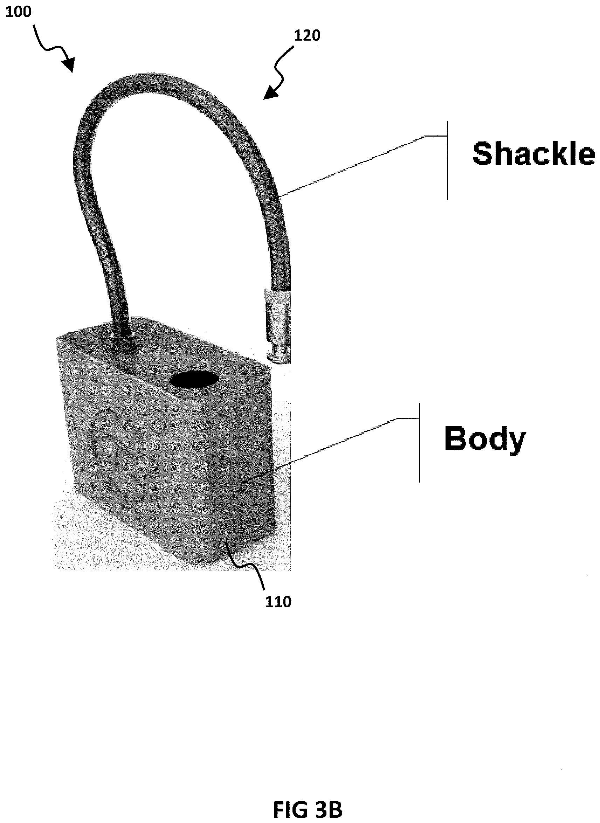

**FIGS 3A** **and** **3B** present schematic and exemplary visual presentations of a Lockout Device **100** of preferred configuration for use in the LOTO system described herein.

Particular implementational details may be obtained with reference to exemplary constructions of United States Patent No 7,610,783, filed at the United States Patent Office 17 November 2004 under Serial Application No US 10/579,583. The subject matter of this publication is incorporated herein in its entirely, with particular reference to the variety of shape memory alloy lock mechanisms presented therein - specifically a stud which can be selectively locked in a SMA-actuated lock mechanism.

Particular implementational details may be obtained with reference to exemplary constructions of United States Patent No 7,637,105, filed at the United States Patent Office 4 April 2006 under Serial Application No US 11/910,624. The subject matter of this publication is incorporated herein in its entirely, with particular reference to preferred power usage for calibration for activating a shape memory alloy lock mechanism.

As is evident in **FIG 3A**, the Lockout Device **100** comprises a body **110** and secure lockable shackle **120**, the body **110** housing a battery **130** powering a control module **140**, and via the control module **140** also a communications module **150** and a lock mechanism **160**. The control module **140** also communicates with the communications module **150** as required. The shackle **120** comprises a cable **122** which terminates at one end in a shackle stud **124** which is received by lock mechanism **160**. The shackle **120** terminates at its opposite end at an anchor **126** affixed to the body **110** of the Lockout Device **100**. When the shackle stud **124** is locked in the body **110** of the Lockout Device **110** by the lock mechanism **160**, the infrastructure subject of LOTO can be secured, as is familiar those skilled in the art. The body **110** and shackle **120** are both fabricated of a suitably robust materials for security purpose - such as a cast steel casing for the body **110** and a braided steel cable for shackle **120** - such as is evident from **FIG 3B**.

### Lockout device algorithm

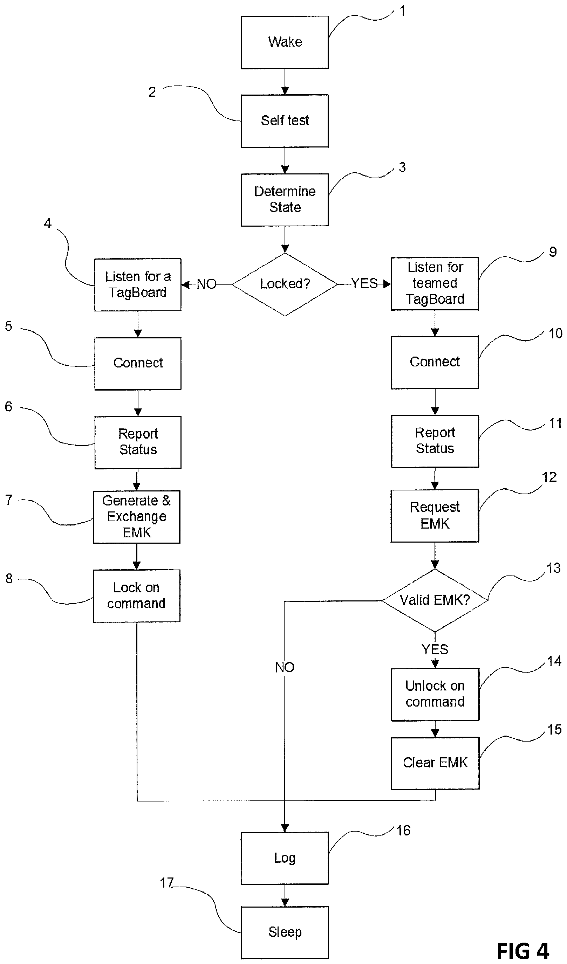

**FIG 4** is a flowchart of steps representative of algorithmic operation of the control module **140** of the lockout device **100**, preferably a firmware module programmed in a high level language. The control module **140** generates an Encrypted Master Key (EMK) each time the lockout device **100** is locked (namely, to lockout an isolation point). The control module **140** is configured to unlock only when a matching EMK is received by way of acknowledgement from the Digital Tagboard **200**, in the manner described in further detail below.

Specific steps of the flowchart of **FIG 3** are annotated directly below in **TABLE 1**.

### TABLE 1

Step **1**. The normal state of the device **100** is in a powered down, sleep mode to conserve battery life. The device **100** may be woken using one of several methods including a simple push button, capacitive sensing, wake on communication and so forth.
Step **2**. On waking the device **100** performs a self-test routine to determine its health, including check battery condition and essential system parameters.
Step **3**. The device **100** then checks its operational state - the device **100** may be closed or open in either locked or unlocked states where a locked state is when an EMK has been issued; unlocked is where no EMK has been issued.
Step **4**. If the device **100** is unlocked then the device **100** waits and listens on the communications system for contact by a valid TagBoard **200**.
Step **5**. On receiving a contact from a valid Tagboard **200** the device **100** connects and 'teams' with the Tagboard **200**. This may involve receiving a unique Tagboard identifier.
Step **6**. The device **100** then reports its status to the teamed Tagboard **200**.
Step **7**. The device **100** generates the Encrypted Master Key (EMK) for that specific teamed Tagboard **200**. The EMK may be generated using one of a number of techniques, as are familiar to those skilled in the art. An example is using the Tagboard ID as a seed for a pseudo random number generator. This Key is then encrypted using one of several techniques, ranging from a simple XOR cypher to more sophisticated approaches such as AES, RSA or DDS. The device logs the EMK and its associated teamed Tagboard ID then transmits the EMK to the Tagboard **200**.
Step **8**. On subsequently receiving a command using the EMK from the teamed Tagboard **200,** the device **100** locks, logs the activity (**16**) and returns to sleep mode (**17**).
Step **9**. If the device **100** state is "locked" then the device **100** waits listening for a connection request from the previously teamed Tagboard **200**.
Step **10**. On receiving a valid communication request from a teamed Tagboard **200** the device **100** negotiates a communication link with the Tagboard **200.**
Step **11**. sends a status report to the Tagboard **200.**
Step **12**. requests the EMK from the teamed Tagboard.
Step **13**. If the EMK received from the Tagboard **200** is invalid, the device **100** closes the communication session, logs the activity (**16**) and returns to sleep mode (**17**).
Step **14**. If the EMK received from the Tagboard **200** is valid the device **100** waits and listens for an unlock command at which time the device **100** unlocks and
Step **15**. clears the EMK, closes the communication session, logs the activity (**16**) and returns to sleep mode (**17**).

### Digital Tagboard

Digital Tagboard **200** is preferably implemented as a custom app for general-purpose tablet hardware, as described below in further detail.

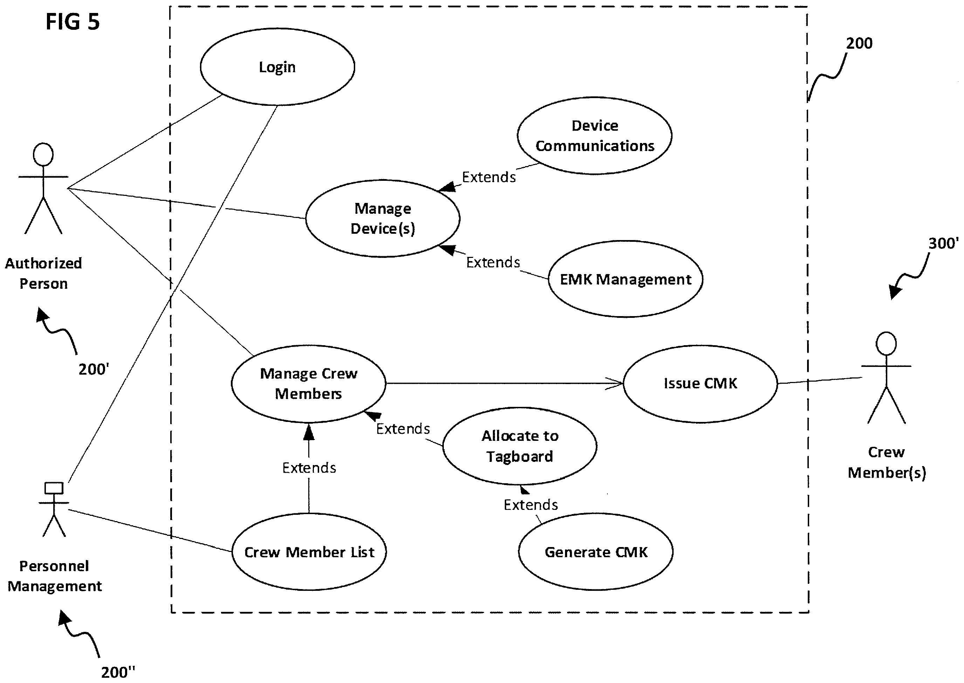

**FIG 5** presents a case structure diagram conceptualising interaction by different parties (as specified roles) with the Digital Tagboard **200** as a logical entity, as well as relationships internal to the Digital Tagboard **200**.

An Authorized Person **200'** and Personnel Manager may both login to a Digital Tagboard **200**. An Authorized Person **200'** manages specific Lockout Devices **100**, and Crew Members **300'**. A Personnel Manager by contrast is confined to interacting with Crew Members **300'**. Directed extend relationships are as indicated. Device Communications extends Manage Devices. EMK Management extends Manage Devices. Crew Member List extends Manage Crew Members. Generate CMK extends Allocate to Tagboard, which in turn extends Manage Crew Members. Issue CMK depends on Manage Crew Members, and transmits CMKs to Crew Members, more specifically Crew Member Apps.

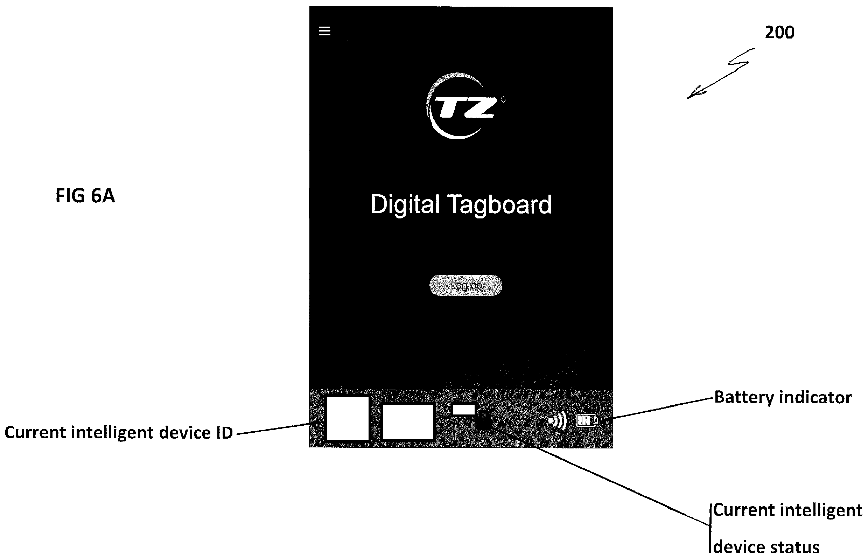

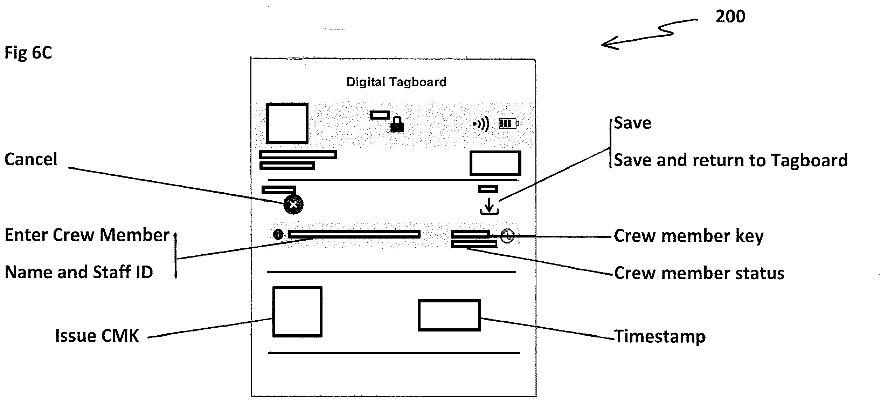

**FIGS 6A to 6C** present a sequence of user interfaces generated by the Digital Tagboard **200**.

**FIG 6A** presents a login wireframe, which presents a Login option for an Authorized Person **200'** to present user credentials. A paired Lockout Device **100** is indicated by an ID number, as well as status (namely Locked or Unlocked).

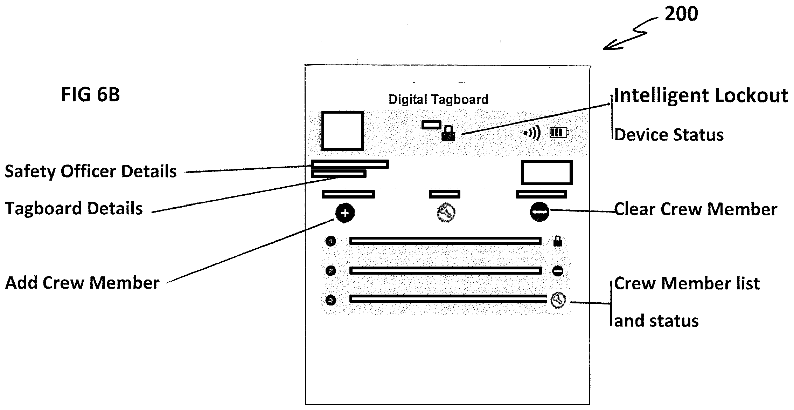

**FIG 6B** presents a landing screen in wireframe, contingent on successful login by an Authorized Person **200'**. This wireframe presents Lockout Device status (Locked or Unlocked), as well as currently logged Crew Members **300'** and their respective status in connection with the Lockout Device (namely Locked, Clear or Issue CMK). There are interface options for the Authorized Person **200'** to Add Crew Member **300'**, Issue CMK, and Clear Crew Member.

### Crew Member App

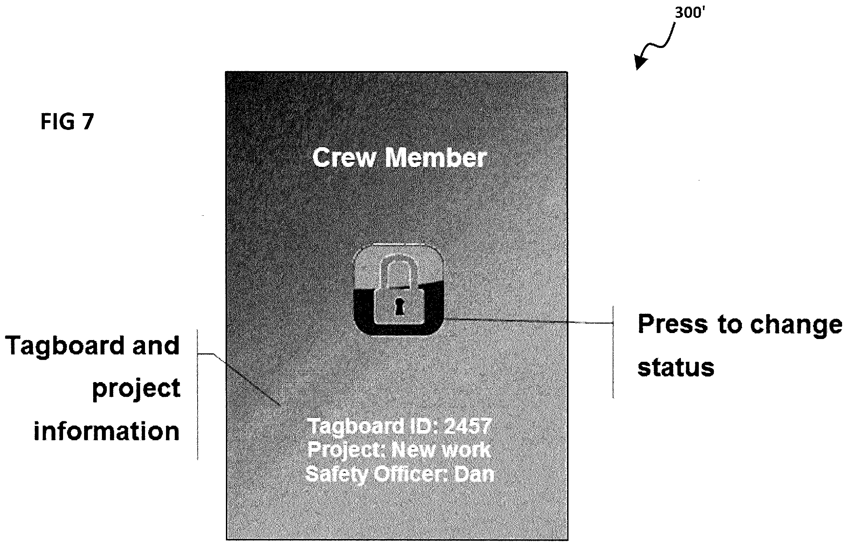

**FIG 7** presents a user interface of the Crew Member App **300**. The interface presents a Crew Member **300'** information as to a particular Digital Tagboard **200** by ID number, by project Title, and logged Crew Member **300'** by name. The status of a particular Lockout Device **100** is indicated graphically, and this interface element can be activated by the Crew Member **300'** to authorise a change - from Locked to Clear, as indicated - or from UnLocked to Locked as may also occur.

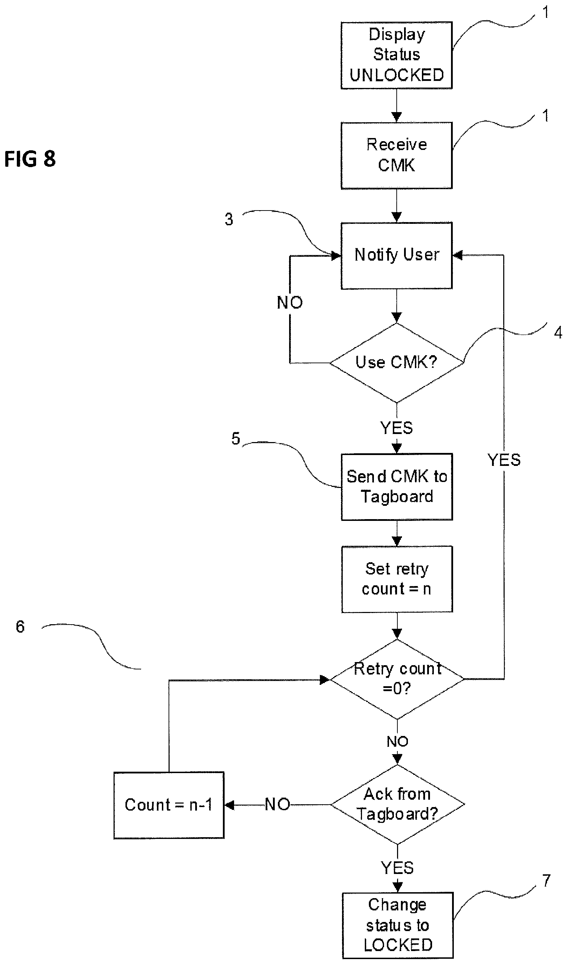

**FIG 8** presents a flowchart of steps performed by the Crew Member App **300'** as a consequence of interaction with the Digital Tagboard **200** and Crew Member **300'** via interaction with the Crew Member App **300**, when a Crew Member **300'** uses an assigned CMK to LOCK to a Digital Tagboard **200**.

Specific steps of the flowchart of **FIG 8** are annotated in **TABLE 2** directly below.

### TABLE 2

Step **1**. On loading the App **300** displays the current status - UNLOCKED.
Step **2**. App **300** receives CMK from the Digital Tagboard **200**. This may for example be via IP over Wifi or Cellular or as an SMS or other small message format.
Step **3**. On receipt of a CMK the App **300** notifies the user **300'.**
Step **4**. The User **300'** then may choose to use the CMK at that point in time or later.
Step **5**. When the user **300'** elects to use the CMK, the CMK and LOCK command is transmitted to the Digital Tagboard **200** via IP over WifI or Cellular or as an SMS or other small message format.
Step **6**. The app **300** waits for a positive acknowledgement from the Tagboard **200** that the LOCK command and CMK have been accepted
Step **7**. Once a positive acknowledgement has been received, the App **300** changes the status to LOCKED, informing the Crew Member **300'** that the CMK has been used.

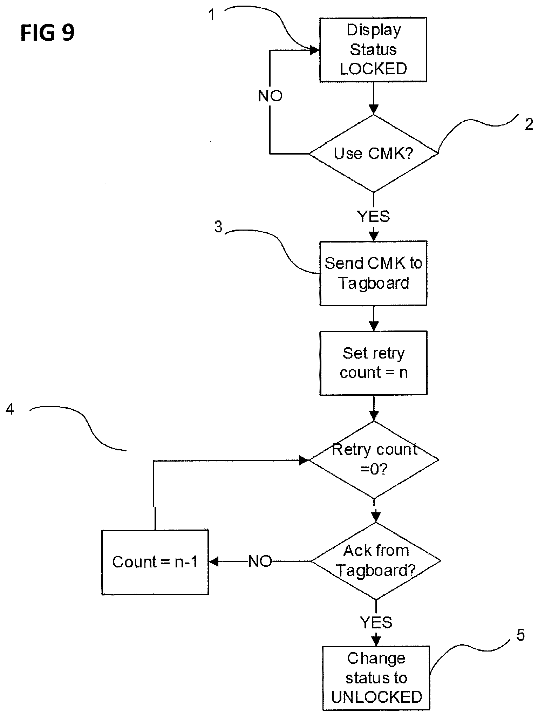

**FIG 9** presents a flowchart of steps performed by the Crew Member App **300**, when a Crew Member **300'** uses CMK to UNLOCK from a Digital Tagboard **200.**

Specific steps of the flowchart of **FIG 9** are annotated in **TABLE 3** directly below.

### TABLE 3

Step **1**. Crew Member App **300** displays status LOCKED.
Step **2**. The user then may choose to use the CMK to UNLOCK form the Digital Tagboard **200** at any point in time.
Step **3**. When the user elects to use the CMK, the CMK and UNLOCK command are sent to the Digital Tagboard **200** via IP over WifI or Cellular or as an SMS or other small message format.
Step **4**. The Crew Member App **300** waits for a positive acknowledgement from the Tagboard **200** that the UNLOCK command and CMK have been accepted.
Step **5**. Once a positive acknowledgement has been received, the Crew Member App **300** changes the status to UNLOCKED, informing the Crew Member **300'** that the CMK has been used.

### Computer system architecture

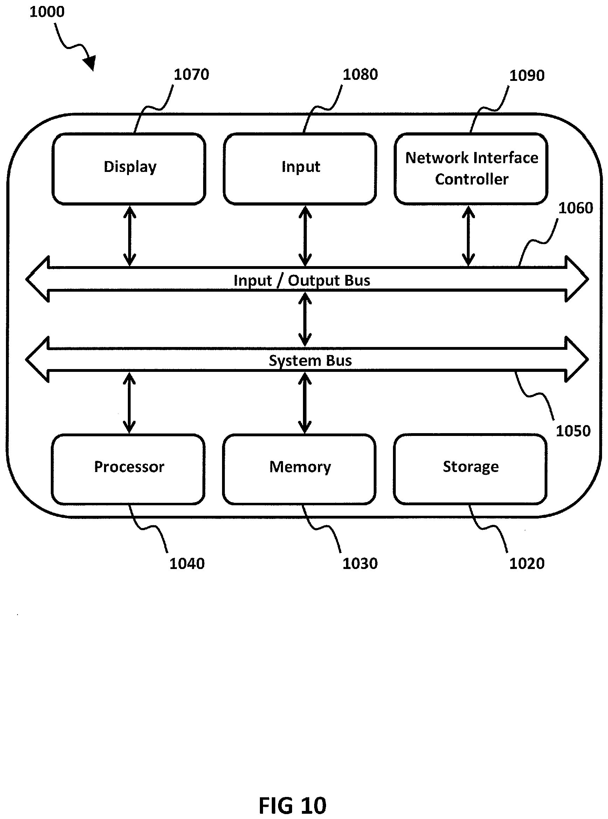

**FIG 10** presents a hardware schematic of a general-purpose computer system 1000 which may be used to implement the Digital Tagboard **200** and Crew Member App **300**. Both these components are preferably implemented as apps executing on general-purpose tablet devices, such as those which operate using Android or iOS operating systems devised for such devices.

While the lockout/tagout system described herein preferably uses a tablet device as the format of the computer system **1000**, implementation may also be via a specialised handheld device (eg custom industrial hardware device), or indeed via smartphone or laptop computer.

The architecture of **FIG 10** abstracts the physical-layer hardware details, which are differently implemented across specific devices.

The computer system **1000** comprises in its principal components a storage **1020**, a memory **1030** and a processor **1040**, each of which is interconnected via a system bus **1050**. The system bus **1050** is linked to an input/output bus **1060**, which interfaces with a display **1070**, input **1080**, and a network interface controller **1090**. The network interface controller **1090** is configured to permit intercommunicates with a network external of the computer system **1000**.

The storage **1020** provides a non-volatile data storage medium for storing application data and executable code, and is typically flash memory, or other data storage device such as a magnetic hard disk drive. The memory **1030** is a random-access memory used to load executable code and application data from storage **1020**.

The processor **1040** executes instructions of a computer program loaded from memory **1030** by performing the basic arithmetic, logical, control and input/output (I/O) operations specified by the instructions. The processor **1040** comprises at least a central processing unit, and may be supported by ancillary processing units for performing specialist functions - such as dedicated graphics processing.

The display **1070** provides a visual window to a user, who can interact via input **1080**. The input **1080** in the example of a personal computer or workstation comprises a keyboard and mouse. Alternatively, in the case of a tablet or smartphone the input **1080** comprises a touchscreen layered over the display **1070**, and responsive to input gestures.

The network interface controller **1090** provides a port for the computer system **1000** to communicate by transmitting data to and receiving data from the network **1100**, and implements electronic circuitry required to communicate using a specific physical layer and data link layer standard.

The network interface controller **1090** is configured to interoperate using wireless standards such as provided by the IEEE 802.11 wi-fi standard, or ITU-R 4G cellular standard, or near-field protocols, as referenced above.

Some components may find logical rather than direct physical expression, such as storage **1020** and memory **1030** - which may share a physical manifestation depending on the particular architecture used.

It will be appreciated that the embodiments described above and illustrated in the attached Figures relate to preferred embodiments of the present invention only and are given by way of illustration. Changes, modifications and variations may be made without departing from the spirit and scope of the present invention.

## Claims

1. A lockout/tagout system comprising a lockout device, a master device and a slave device, the lockout device and master device being configured in mutual relationship for duplex communication such that the lockout device can unlock upon a request received from the master device, which is accepted by the lockout device contingent upon an authentication protocol between the master device and the lockout device; and the master device and the slave device being configured in mutual relationship for duplex communication such that the master device receives a 'clear' request from the slave device, which is accepted by the master device contingent upon an authentication protocol between the master device and the slave device.

2. A lockout/tagout system according to claim 1, wherein the lockout device comprises a lock mechanism in communication with a control module, which is in turn in communication with a communications module, whereby the lock mechanism can lock and unlock under direction of the control module, and the control module communicates with the master device via the communications module.

3. A lockout/tagout system according to claim 2, wherein the lock mechanism includes shape memory alloy activation.

4. A lockout/tagout system according to claim 1, wherein the authentication protocol between the lockout device and the master device includes a master key generated by the lockout device for transmission the master device.

5. A lockout/tagout system according to claim 4, wherein the authentication protocol between the master device and the slave device includes a slave key generated by the master device for transmission to the slave device.

6. A lockout/tagout system according to claim 5, wherein the 'clear' request requires activation of the slave key.

7. A lockout/tagout system according to claim 1, which includes a plurality of slave devices and the authentication protocol requires that the master device receives a 'clear' request from each slave device.

8. A lockout/tagout system according to claim 1, wherein the master device is implemented as an app on a tablet computing device.

9. A lockout/tagout system according to claim 1, wherein the slave device is implemented as an app on a tablet computing device.

10. A lockout device for use in implementing lockout/tagout protocols, the lockout device comprising a lock mechanism in communication with a control module, which is in turn in communication with a communications module, the lockout device configured for duplex communication with a master device via the communications module, such that the lockout device can unlock upon a request received from the master device, which is accepted by the lockout device contingent upon an authentication protocol between the master device and the lockout device.

11. A method of operating a lockout/tagout system comprising a lockout device, a master device and a slave device, the lockout device and master device being configured in mutual relationship for duplex communication such that the lockout device can unlock upon a request received from the master device, which is accepted by the lockout device contingent upon an authentication protocol between the master device and the lockout device, the method including the steps of:
(a) the lockout device generating a master key;
(b) the lockout device transmitting the master key to the master device;
(c) the master device receiving and holding the master key;
(d) the master device generating a slave key;
(e) the master device transmitting the slave key to the slave device;
(f) the slave device accepting a 'clear' request from a slave device operator;
(g) the slave device transmitting the 'clear' request to the master device together with the slave key; and
(h) the master device transmitting the master key to the lockout device to unlock the lockout device.

12. The method of claim 11, wherein there is a plurality of slave devices and:
- in step (d) the master device generates a plurality of slave keys, each slave key being unique to one of the slave devices;
- in step (e) the master device transmits a unique slave key to each of the respective slave devices;
- in step (g) each of the slave devices transmits to the master device the 'clear' request together with the slave key unique to that slave device; and
- step (h) takes place after all the slave devices have completed step (g).

13. The method of claim 11, wherein the lockout device includes a lock mechanism having shape memory alloy activation.

14. The method of claim 11, wherein the master device is implemented as an app on a tablet computing device.

15. The method of claim 11, wherein the slave device is implemented as an app on a tablet computing device.
